# EUROPEAN PATENT APPLICATION

(11) **EP 3 188 328 A1**
(43) Date of publication of application: **05.07.2017**
(21) Application number: 15203130.8
(22) Date of filing: 30.12.2015
(51) Int. Cl.: H02B 1/28, H02B 1/30, H02G 3/08

(54) **CABLE DISTRUBUTION BOX**

(71) Applicant: Bomar S.A. w upadlosci ukladowej, 41-400 Myslowice (PL)
(72) Inventor: LESNIAK, Tomasz, 45-265 Opole (PL); MAAOLEPSZY, Stanislaw, 43-600 Jaworzno (PL); NIEMCZYK, Piotr, 43-230 Goczalkowice Zdroj (PL); WEGRZYNEK, Bogdan, 33-300 Nowy Sacz (PL)
(74) Representative: Korga, Leokadia

(57) **Abstract**

The object of the invention is a control box 5core cable for use in mines. Cable connection box is comprising at least two sets of inlets characterized in that each of the male has a diameter of between 30 and 40 mm.

## Description

The object of the invention is a control box 5core cable for use in mines.

From the description of application PL 100248 is known switchboard which is part of the electrical system, especially detached houses, detached houses. The cabinet has a metal body, comprising three rectangular panels releasably connected to one another. Panel located in upper level is a measuring panel, placed in the middle is a connector cable, while the panel is the basis is a foundation of the cabinet. On the edge of the vertical measurement of the box is mounted inside the movable tension slot whose handle is located inside the junction box. On the edge of the measuring box and mobile slot identical cut can be found.

Patent PL 344605 is known as switchboard box and is composed of a frame which has side walls, a top wall and a bottom wall. The interior of the housing is divided by horizontal plates and vertical partition walls into a number of chambers which is mounted electrical equipment. The bottom wall is a grid plate and is constructed of longitudinal strips and transverse strips, which have cross-sectional shape of the channel section. The horizontal plate has one or more pairs of openings. The side walls and the inner surface of the vertical divisions on both flat surfaces of the fastening strips sockets are located.

Patent PL 391887 is known explosion-cam characterized in that the cam implementing disposed within a housing with a sealable cover and fixed to the bottom by means of grooves and between adjoining edges of the housing and cover the entire circumference thereof is disposed gasket material elastic-spring. The cover is provided outside a scroll wheel mounted on a threaded element to the coupling element, passing through the opening in the lid, and a coupling element connected to the drive shaft of the cam implementing wherein the hole from the inside of the cover (2) abuts arranged concentrically annular seal.

From the description of model PL 120881 is known switchgear housing is composed of a frame which has side walls, a top wall and a bottom wall. The interior of the housing is divided by horizontal plates and vertical partition walls into a number of chambers which is mounted electrical equipment. The bottom wall is a grid plate and is constructed of longitudinal strips and transverse strips, which have cross-sectional shape of the channel section. The horizontal plate has one or more pairs of openings. The side walls and the inner surface of the vertical divisions on both flat surfaces of the fastening strips are sockets. Vertical baffles are mounted in the grooves in the battens or studs holes horizontal plate patent

There are known solutions for the use of distribution boxes in mines underground. There is no one solution regarding the separation of the 5 core cable used in mining. In the present solution proposed for distribution boxes of the selected entry units enlarged diameter allows installation of cables 5 wire.

The clue is a cable connection box comprising at least two sets of inlets characterized in that each of the male has a diameter of between 30 and 40 mm.

Preferably, when the cache has at least one male assembly having an outer diameter of 10-20 mm.

Preferably, when the housing with a diameter of 30-40 mm has a removable reducer to a diameter of 10-20 mm.

Example of the invention is a cable connection box assembly comprising a inlet with a diameter of 30-40 mm, and two sets of inlets having a diameter of 10-20 mm.

The example implementation does not exhaust the possibilities of application solutions

## Claims

1. The cable distribution box comprising at least two sets of inlet units, **characterized in that** each inlet unit with a diameter of between 30 and 40 mm.

2. The distribution box cables according to claim 1, **characterized in that** it also comprises at least one inlet unit with an outer diameter of 10-20 mm.

3. The distribution box according to claim 1 or 2, **characterized in that** the inlet unit with a diameter of 30-40 mm has a removable regulator to a diameter of 10-20 mm
